(19) Europäisches Patentamt / European Patent Office / Office européen des brevets

(11) **EP 4 439 019 B1**

(12) **EUROPEAN PATENT SPECIFICATION**

(45) Date of publication and mention
of the grant of the patent:
**25.03.2026 Bulletin 2026/13**

(21) Application number: **22968742.1**

(22) Date of filing: **23.12.2022**

(51) International Patent Classification (IPC):
**G01F 1/66** (2022.01)

(52) Cooperative Patent Classification (CPC):
**G01F 1/66; G01F 1/662; G01F 1/667**

(86) International application number:
**PCT/JP2022/047760**

(87) International publication number:
**WO 2024/134908 (27.06.2024 Gazette 2024/26)**

(54) **ULTRASONIC FLOWMETER, AND MEASURING METHOD**

ULTRASCHALL-DURCHFLUSSMESSER UND MESSVERFAHREN

DÉBITMÈTRE À ULTRASONS ET PROCÉDÉ DE MESURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024 Bulletin 2024/40**

(73) Proprietor: **Fuji Electric Co., Ltd.
Kawasaki-shi,
Kanagawa 210-9530 (JP)**

(72) Inventor: **YAMADA, Kazuyuki
Kawasaki-shi, Kanagawa 210-9530 (JP)**

(74) Representative: **Appelt, Christian W.
Boehmert & Boehmert
Anwaltspartnerschaft mbB
Pettenkoferstrasse 22
80336 München (DE)**

(56) References cited:
JP-A- 2021 060 343      JP-A- 2021 067 572
JP-A- 2021 067 572      JP-B2- 7 174 574
US-A1- 2015 292 926

**Description**

TECHNICAL FIELD

The present disclosure relates to an ultrasonic flowmeter and a measurement method.

BACKGROUND ART

A measurement apparatus that transmits an ultrasonic wave from one sensor to another sensor, extracts a waveform (trigger waveform) that crosses a trigger level from the reception waveform of an ultrasonic wave, and measures the time it takes for the extracted trigger waveform to cross a zero line is known. The measurement apparatus measures, as a propagation time, a time interval from the transmission of the ultrasonic wave to a zero-crossing point, and uses the measured propagation time to calculate the flow rate of fluid through which the ultrasonic wave propagates.

RELATED-ART DOCUMENTS

PATENT DOCUMENTS

Patent Document 1: JP 2007-322194 A
JP 2021-067572 A discloses a ultrasonic flow meter comprising a missing part detection unit, which detects a missing part in a zero-cross time in a time arrangement stored in a measurement unit. An interpolation unit determines interpolation data obtained by using the zero-cross time stored in a storage position of the time arrangement immediately before or immediately after a missing part detected by the missing part detection unit as the zero-cross time of the missing part.

SUMMARY OF THE INVENTION

PROBLEM TO BE SOLVED BY THE INVENTION

However, if a foreign substance is mixed in a medium such as fluid through which an ultrasonic wave propagates or if the temperature of the medium changes, the reception waveform of the ultrasonic wave changes, and a time shift may occur in a trigger waveform. In such a case, the measurement accuracy of the propagation time of the ultrasonic wave may be reduced, and a calculation error of the physical quantity (for example, the flow rate of the fluid) of the medium through which the ultrasonic wave propagates may become large.
The present disclosure provides an ultrasonic flowmeter and a measurement method in which a reduction of the measurement accuracy of the propagation time of an ultrasonic wave can be suppressed.

MEANS TO SOLVE THE PROBLEM

An ultrasonic flowmeter and a measurement method according to the present invention are defined in independent claims 1 and 9, respectively. Preferred embodiments are defined in dependent claims 2 to 8 and 10.

EFFECTS OF THE INVENTION

According to the present disclosure, an ultrasonic flowmeter and a measurement method, in which a reduction of the measurement accuracy of the propagation time of an ultrasonic wave can be suppressed, can be provided.

BRIEF DESCRIPTION OF THE DRAWINGS

[FIG. 1] FIG. 1 is a diagram illustrating an example configuration an ultrasonic flowmeter according to one embodiment;
[FIG. 2] FIG. 2 is a diagram illustrating Snell's law for determining the angle of incidence in fluid; [FIG. 3] FIG. 3 is a diagram illustrating an example configuration of a receiver;
[FIG. 4] FIG. 4 is a diagram illustrating a reception timing signal;
[FIG. 5] FIG. 5 is a waveform diagram illustrating propagation times of an ultrasonic wave from a sensor 1 to a sensor 2;
[FIG. 6] FIG. 6 is a waveform diagram illustrating propagation times of an ultrasonic wave from a sensor 2 to a sensor 1;
[FIG. 7] FIG. 7 is a waveform diagram illustrating five propagation times Tab (UT1, UT2, UT3, UT4, and UT5) and five propagation times Tba (DT1, DT2, DT3, DT4, and DT5);

[FIG. 8] FIG. 8 is a waveform diagram illustrating time shifts in trigger waveforms;

[FIG. 9] FIG. 9 is a flowchart illustrating flows of a propagation time determination process; and

[FIG. 10] FIG. 10 is a flowchart illustrating flows of a propagation time difference calculation process.

MODE FOR CARRYING OUT THE INVENTION

In the following, embodiments of the present invention will be described with reference to the drawings.

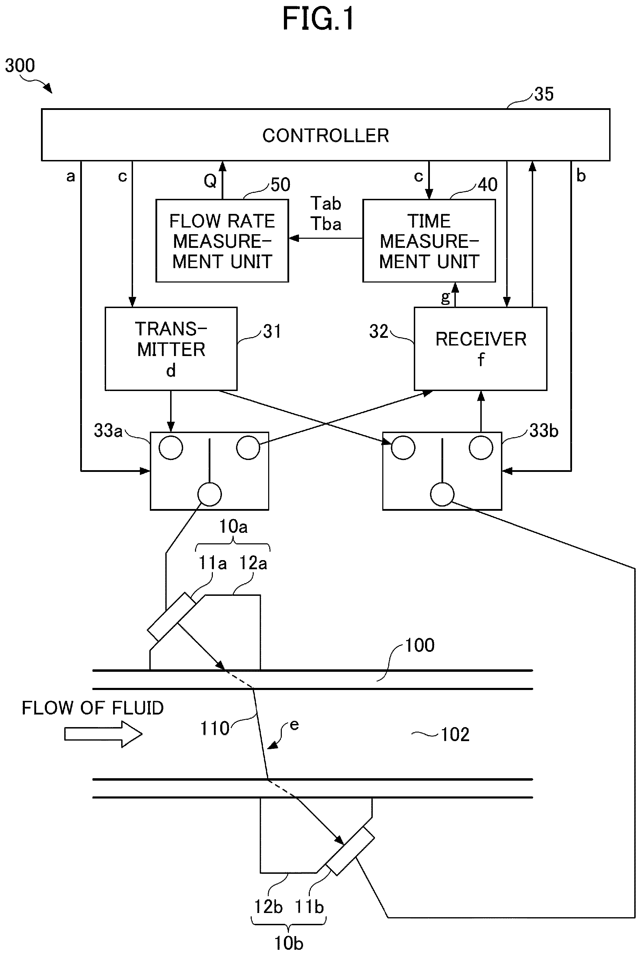

FIG. 1 is a diagram illustrating an example configuration an ultrasonic flowmeter according to an embodiment. The ultrasonic flowmeter measures the flow rate of fluid (gas or liquid) flowing through a flow channel by using ultrasonic waves. The ultrasonic flowmeter includes two or more ultrasonic transducers arranged along a measurement conduit or in the measurement conduit. The two or more ultrasonic transducers include a transmission-side transducer and a reception-side transducer. The transmission-side transducer and the reception-side transducer are arranged such that a direction connecting the transmission-side transducer and the reception-side transducer is oblique to or coincides with the direction of flow of the fluid. The ultrasonic flowmeter measures the flow rate of the fluid in the measurement conduit based on the propagation times of the ultrasonic waves transmitted and received between the transmission-side transducer and the reception-side transducer.

An ultrasonic flowmeter 300 illustrated in FIG. 1 includes an ultrasonic probe 10a, an ultrasonic probe 10b, a controller 35, a transmitter 31, a switch 33a, a switch 33b, a receiver 32, a time measurement unit 40, and a flow rate measurement unit 50.

The controller 35 performs control that switches between transmitting an ultrasonic wave e from an ultrasonic transducer 11a of the ultrasonic probe 10a toward fluid 102 in a pipe 100 and transmitting an ultrasonic wave e from an ultrasonic transducer 11b of the ultrasonic probe 10b toward the fluid 102 in the pipe 100.

The ultrasonic probe 10a is disposed on the upstream side of the fluid 102 flowing in the pipe 100 so as to face the outer surface of the pipe 100. The ultrasonic probe 10a includes the ultrasonic transducer 11a and a wedge 12a made of a resin. The ultrasonic probe 10b is disposed on the downstream side of the fluid 102 flowing in the pipe 100 so as to face the outer surface of the pipe 100. The ultrasonic probe 10b includes the ultrasonic transducer 11b and a wedge 12b made of a resin.

The wedge 12a has a surface inclined with respect to the outer surface of the pipe 100, and the ultrasonic transducer 11a is attached to the inclined surface. Therefore, an ultrasonic wave generated by the ultrasonic transducer 11a enters the pipe 100 from the wedge 12a at a predetermined inclination angle, propagates through the fluid 102, and reaches the ultrasonic transducer 11b.

The wedge 12b has a surface inclined with respect to the outer surface of the pipe 100, and the ultrasonic transducer 11b is attached to the inclined surface. Therefore, an ultrasonic wave generated by the ultrasonic transducer 11b enters the pipe 100 from the wedge 12b at a predetermined inclination angle, propagates through the fluid 102, and reaches the ultrasonic transducer 11a.

The ultrasonic transducer 11a is selectively connected to the transmitter 31 or the receiver 32 by a switching operation of the switch 33a. The ultrasonic transducer 11b is selectively connected to the receiver 32 or the transmitter 31 by a switching operation of the switch 33b.

The controller 35 is a circuit that generates selection signals a and b for selecting a transducer to transmit an ultrasonic wave (that is, a transducer to be excited) among the ultrasonic transducers 11a and 11b, and generates transmission timing signals c for instructing the timing of ultrasonic-wave transmission.

In a case where the ultrasonic transducer 11a is selected as a transducer to transmit an ultrasonic wave e, the switch 33a selects the ultrasonic transducer 11a as the transducer to transmit the ultrasonic wave e in accordance with a selection signal a from the controller 35. In this case, the switch 33b selects the ultrasonic transducer 11b as a transducer to receive the ultrasonic wave e in accordance with a selection signal b from the controller 35.

The transmitter 31 is a circuit that transmits an electric signal d (for example, one or more pulse signals for exciting the ultrasonic transducer 11a) to the ultrasonic transducer 11a via the switch 33a in accordance with a transmission timing signal c from the controller 35, and causes the ultrasonic transducer 11a to generate the ultrasonic wave e. The generated ultrasonic wave e passes through the wedge 12a and the pipe 100, and enters the fluid 102 in the pipe 100. The ultrasonic wave e entering the fluid 102 in the pipe 100 propagates to the ultrasonic transducer 11b of the ultrasonic probe 10b placed on the outer surface on the opposite side of the pipe 100, and is converted into an electric signal by the ultrasonic transducer 11b. The electric signal output from the ultrasonic transducer 11b is received as a reception signal f by the receiver 32 via the switch 33b.

The time measurement unit 40 measures, as a propagation time Tab, the time it takes for the ultrasonic wave e transmitted from the ultrasound transducer 11a to be received by the ultrasound transducer 11b. For example, the time measurement unit 40 is a circuit that measures the propagation time Tab based on, for example, the transmission timing signal c indicating a timing at which the ultrasonic wave e starts to be transmitted from the ultrasonic transducer 11a and a reception timing signal g indicating a timing at which the ultrasonic wave e is received by the ultrasonic transducer 11b.

Next, the ultrasonic flowmeter 300 switches between the switch 33a and the switch 33b in accordance with a signal from the controller 35, and reverses a transmission/reception relationship between the ultrasonic probe 10a and the ultrasonic probe 10b.

In a case where the ultrasonic transducer 11b is selected as a transducer to transmit an ultrasonic wave e, the switch 33a selects the ultrasonic transducer 11a as a transducer to receive the ultrasonic wave e in accordance with a selection signal a from the controller 35. In this case, the switch 33b selects the ultrasonic transducer 11b as the transducer to transmit the ultrasonic wave e in accordance with a selection signal b from the controller 35.

The transmitter 31 is a circuit that transmits an electric signal d (for example, one or more pulse signals for exciting the ultrasonic transducer 11b) to the ultrasonic transducer 11b via the switch 33b in accordance with a transmission timing signal c from the controller 35, and causes the ultrasonic transducer 11b to generate the ultrasonic wave e. The generated ultrasonic wave e passes through the wedge 12b and the pipe 100, and enters the fluid 102 in the pipe 100. The ultrasonic wave e entering the fluid 102 in the pipe 100 propagates to the ultrasonic transducer 11a of the ultrasonic probe 10a placed on the outer surface on the opposite side of the pipe 100, and is converted into an electric signal by the ultrasonic transducer 11a. The electric signal output from the ultrasonic transducer 11a is received as a reception signal f by the receiver 32 via the switch 33a.

The time measurement unit 40 measures, as a propagation time Tba, the time it takes for the ultrasonic wave e transmitted from the ultrasonic transducer 11b to be received by the ultrasound transducer 11a. For example, the time measurement unit 40 is a circuit that measures the propagation time Tba based on, for example, the transmission timing signal c indicating a timing at which the ultrasonic wave e starts to be transmitted from the ultrasonic transducer 11b and a reception timing signal g indicating a timing at which the ultrasonic wave e is received by the ultrasonic transducer 11a.

The order of measuring the propagation time Tab and the propagation time Tba may be reversed.

The flow rate measurement unit 50 calculates a flow rate Q of the fluid 102 by using the measurement times (the propagation time Tab and the propagation time Tba) obtained by the time measurement unit 40. The calculation of the flow rate Q will be described below.

The following Equations are established for the propagation times Tab and Tba.

$$\mathrm{Tab\ =\ Lf/(Cf\ +\ Vsin\theta_{fs})\quad\ldots(1)}$$

$$\mathrm{Tba\ =\ Lf/(Cf\ -\ Vsin\theta_{fs})\quad\ldots(2)}$$

In the above Equations, cf is the velocity of sound in the fluid 102 in the pipe 100, V is the flow velocity of the fluid 102, $\theta_{fs}$ is the angle of incidence in the fluid (the angle of refraction from the pipe 100 to the fluid 102 or the angle of incidence from the fluid 102 to the pipe 100), and Lf is the length of a propagation path 110 of an ultrasonic wave e in the pipe 100.

Solving the Equations (1) and (2) with respect to V yields the following Equation.

$$\mathrm{V\ =\ Lf/(2sin\theta_{fs})\ \times\ ((1/Tab)\ -\ (1/Tba))\quad\ldots(3)}$$

The flow rate Q is obtained by the following Equation.

$$\mathrm{Q\ =\ V\ \times\ A\quad\ldots(4)}$$

In the above Equation, A is the cross-sectional area of the pipe 100. The cross-sectional area A is calculated as follows by using an inner radius r of the pipe 100.

$$\mathrm{A\ =\ \pi\ \times\ r^2\quad\ldots(5)}$$

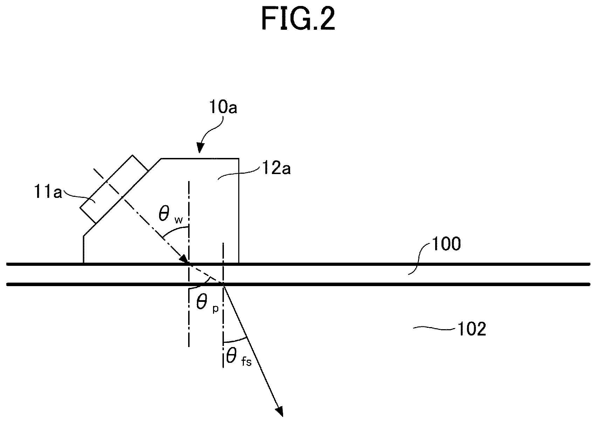

FIG. 2 is a diagram illustrating Snell's law for determining the angle of incidence $\theta_{fs}$ in the fluid. According to Snell's law, the following Equation is established.

$$\mathrm{Cw/sin\theta_w\ =\ Cp/sin\theta_p\ =\ Cf/sin\theta_{fs}\quad\ldots(6)}$$

In the above Equation, Cw is the velocity of sound in the wedge 12a, and $\theta_w$ is the angle of incidence in the wedge (the angle of incidence from the wedge 12a to the pipe 100 or the angle of refraction from the pipe 100 to the wedge 12a). Cp is the velocity of sound in the pipe 100, and $\theta_p$ is the angle of incidence in the pipe (the angle of refraction from the wedge 12a to the pipe 100, the angle of incidence from the pipe 100 to the fluid 102, or the angle of incidence from the pipe 100 to the wedge 12a). Cf is the velocity of sound in the fluid 102, and $\theta_{fs}$ is the angle of incidence in the fluid (the angle of refraction from the pipe 100 to the fluid 102 or the angle of incidence from the fluid 102 to the pipe 100).

Cw, $\sin\theta_w$, and Cf are known values, and thus the angle of incidence $\theta_{fs}$ in the fluid can be obtained by the Equation (6). Accordingly, the flow rate measurement unit 50 can calculate the flow rate Q based on the Equations (1) to (5).

The flow rate measurement unit 50 is, for example, a computing circuit including a processor, such as a central processing unit (CPU), and a memory. The computing circuitry may include at least one of the controller 35 or the time measurement unit 40. The functions of (processes performed by) the flow rate measurement unit 50, the controller 35, and the time measurement unit 40 are implemented by, for example, the processor operating according to a program stored in the memory. The functions may be implemented by a field programmable gate array (FPGA) or an application specific integrated circuit (ASIC). The controller 35 or the time measurement unit 40 may be implemented by a logic circuit.

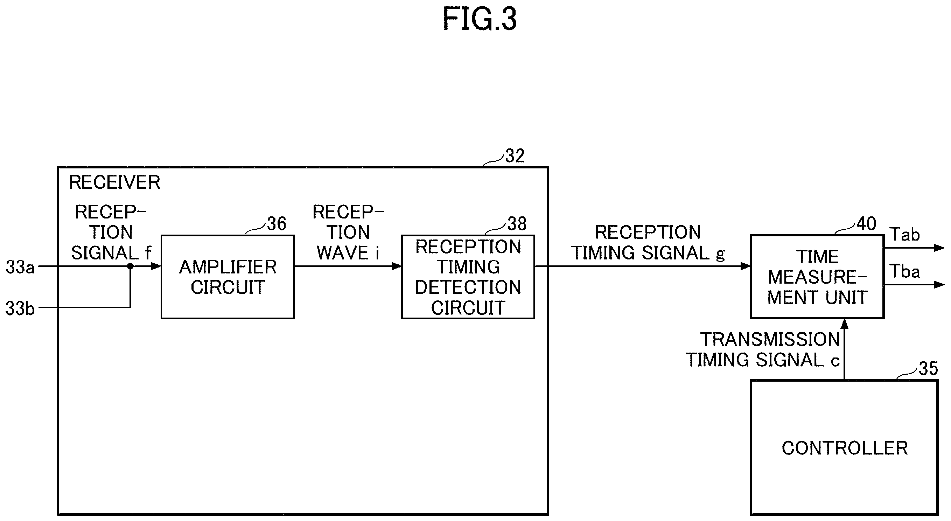

FIG. 3 is a diagram illustrating an example configuration of the receiver. The receiver 32 includes an amplifier circuit 36 and a reception timing detection circuit 38. The amplifier circuit 36 amplifies a reception signal f input via the switch 33a or the switch 33b, and outputs a reception wave i that is the amplified reception signal f. The reception timing detection circuit 38 generates a reception timing signal g indicating a timing at which an ultrasonic wave e is received by the ultrasonic transducer 11a or the ultrasonic transducer 11b, based on the input reception wave i.

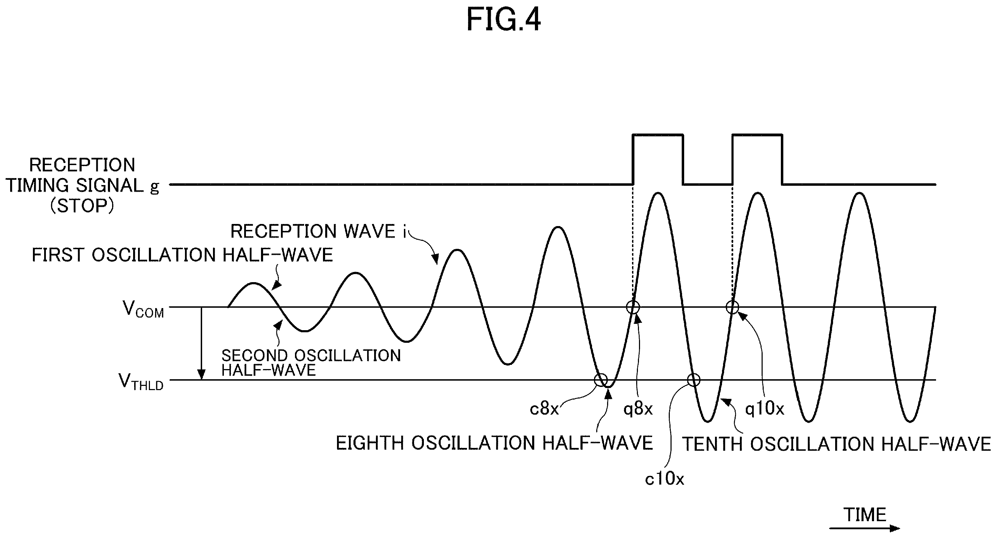

FIG. 4 is a diagram illustrating a reception timing signal g. The reception timing detection circuit 38 detects a time point (a zero-crossing time point q8x or a zero-crossing time point q10x in FIG. 4) at which a reception wave i crosses a reference level $V_{COM}$ after the reception wave i crosses a threshold voltage $V_{THLD}$.

The reception timing detection circuit 38 detects a specific oscillation half-wave whose amplitude crosses the threshold voltage $V_{THLD}$, from among a plurality of oscillation half-waves included in the reception wave i. For example, the reception timing detection circuit 38 detects, as the specific oscillation half-wave, an eighth oscillation half-wave whose amplitude crosses the reference voltage $V_{THLD}$ at a trigger time point c8x, or a tenth oscillation half-wave whose amplitude crosses the reference voltage $V_{THLD}$ at a trigger time point c10x. The reception timing detection circuit 38 detects a time point (the zero-crossing time point q8x or the zero-crossing time point q10x in the example illustrated in FIG. 4,) at which the rear end of the specific oscillation half-wave crosses the reference level $V_{COM}$, and outputs, as a reception timing signal g, a stop pulse STOP generated at the time point.

The time measurement unit 40 (FIG. 3) measures a time interval from a transmission timing signal c indicating a timing at which an ultrasonic wave e starts to be transmitted from the ultrasonic transducer 11a to a reception timing signal g (stop pulse STOP)) indicating a timing at which the ultrasonic wave e is received by the ultrasonic transducer 11b. The time measurement unit 40 outputs the measured value of the time interval as a propagation time Tab. Similarly, the time measurement unit 40 measures a time interval from a transmission timing signal c indicating a timing at which an ultrasonic wave e starts to be transmitted from the ultrasonic transducer 11b to a reception timing signal g (stop pulse STOP)) indicating a timing at which the ultrasonic wave e is received by the ultrasonic transducer 11a. The time measurement unit 40 outputs the measured value of the time interval as a propagation time Tba.

However, if the amplitude of the reception wave i or the threshold voltage $V_{THLD}$ as illustrated in FIG. 4 deviates from an expected value, a reception timing signal g (stop pulse STOP)) may be generated based on an immediately-previous or immediately-subsequent one full-wave. In such a case, there would be a possibility that a measurement error would occur in the propagation time Tab or the propagation time Tba.

In the ultrasonic flowmeter according to the present embodiment, the reception timing detection circuit 38 detects a plurality of specific oscillation half-waves whose amplitudes cross the threshold voltage $V_{THLD}$, among a plurality of oscillation half-waves included in a reception wave i. The reception timing detection circuit 38 detects a plurality of time points (for example, four or more zero-crossing time points) at which the rear ends of the plurality of specific oscillation half-waves cross the reference level $V_{COM}$, and outputs, as a plurality of reception timing signals g, a plurality of stop pulses STOP generated at the plurality of time points.

Further, the time measurement unit 40 measures time intervals from a transmission timing signal c indicating a timing at which an ultrasonic wave e starts to be transmitted from the ultrasonic transducer 11a to the reception timing signals g (stop pulses STOP) generated at the plurality of zero-crossing time points and each indicating a timing at which the ultrasonic wave e is received by the ultrasonic transducer 11b. The time measurement unit 40 outputs, as a plurality of propagation times Tab, the measured values of the time intervals from the transmission timing signal to the zero-crossing time points. Similarly, the time measurement unit 40 measures time intervals from a transmission timing signal c indicating a timing at which an ultrasonic wave e starts to be transmitted from the ultrasonic transducer 11b to reception timing signals g (stop pulses STOP) generated at a plurality of zero-crossing time points and each indicating a timing at which the ultrasonic wave e is received by the ultrasonic transducer 11a. The time measurement unit 40 outputs, as a plurality of propagation times Tba, the measured values of the time intervals from the transmission timing signal to the zero-crossing time points.

The flow rate measurement unit 50 extracts a specific propagation time Tabs whose difference from a reference propagation time Tr is within a first predetermined range from among the plurality of propagation times Tab, and extracts a specific propagation time Tbas whose difference from the reference propagation time Tr is within the first predetermined range from among the plurality of propagation times Tba. Accordingly, the propagation times (propagation times Tabs and Tbas) with relatively small errors are extracted from the plurality of propagation times, and thus, a reduction in the measurement accuracy of the propagation times of the ultrasonic waves is suppressed. The flow rate measurement unit 50 uses the specific propagation times Tabs and Tbas to calculate the flow rate Q of the fluid through which the ultrasonic waves propagate based on the above Expressions (1) to (5), and thus the calculation accuracy of the flow rate Q is improved.

Next, the ultrasonic flowmeter and a measurement method according to the present embodiment, in which a reduction in the measurement accuracy of the propagation times of the ultrasonic waves can be suppressed, will be described in more detail.

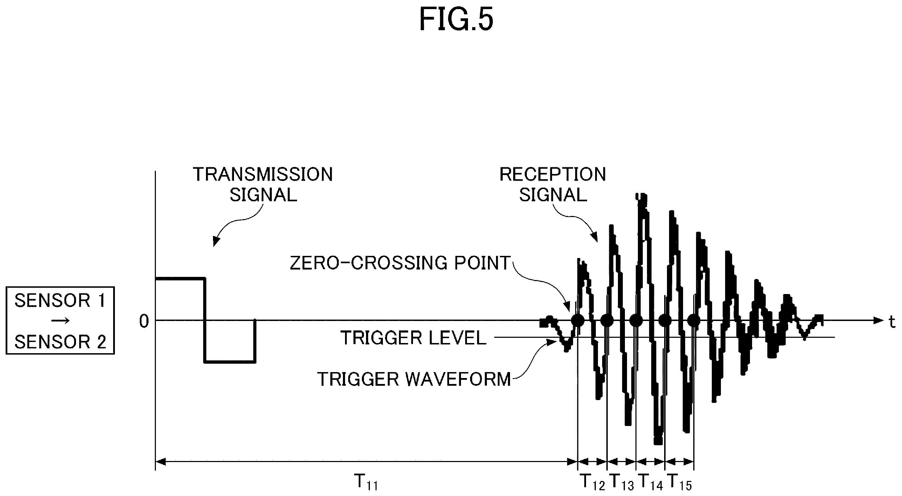

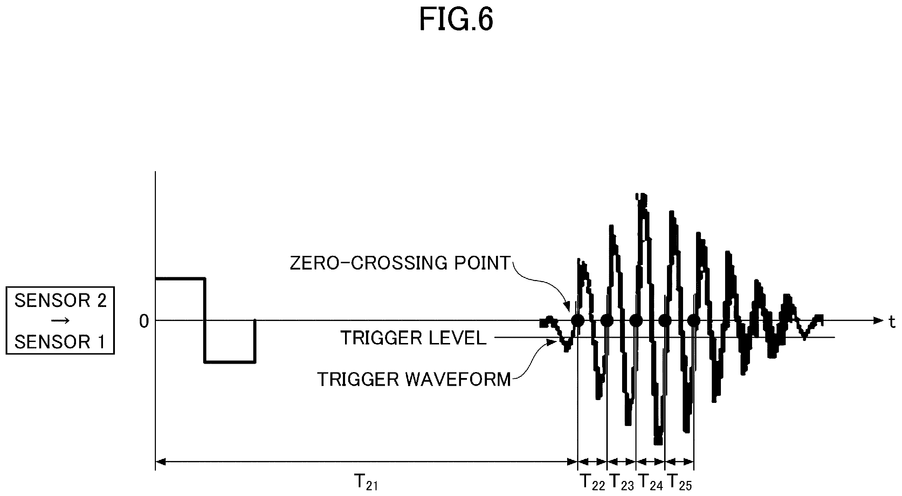

FIG. 5 is a waveform diagram illustrating propagation times Tab of an ultrasonic wave from a sensor 1 to a sensor 2. FIG. 6 is a waveform diagram illustrating propagation times Tba of an ultrasonic wave from the sensor 2 to the sensor 1.

In FIG. 5 and FIG. 6, the sensor 1 corresponds to the above-described ultrasonic probe 10a, and the sensor 2 corresponds to the above-described ultrasonic probe 10b. A transmission signal corresponds to an electric signal d or an ultrasonic wave e as described above, and a reception signal corresponds to a reception signal f or a reception wave i as described above. A trigger level corresponds to the above-described threshold voltage $V_{THLD}$, a trigger waveform corresponds to specific oscillation half-waves as described above, and a zero-crossing point corresponds to a zero-crossing time point as described above. Further, t represents time.

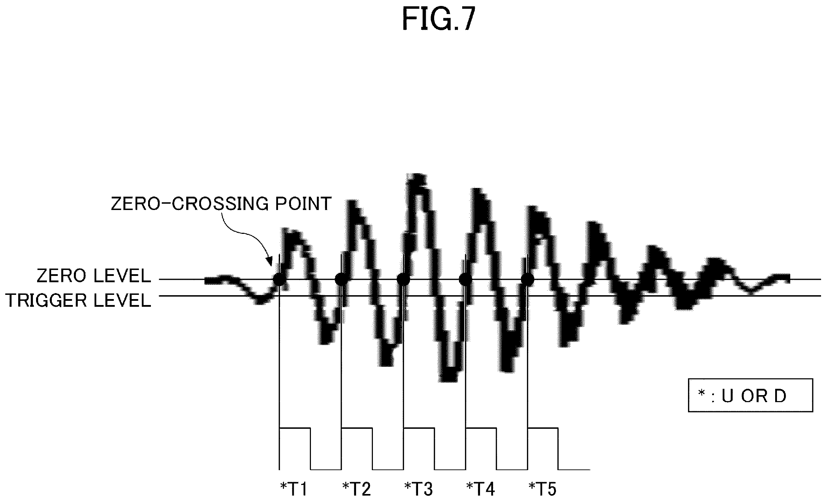

In FIG. 5, in a case where an ultrasonic wave is transmitted from the sensor 1 to the sensor 2, the reception timing detection circuit 38 detects five zero-crossing points at which a reception signal crosses a reference level (in this example, a zero level) after the reception signal crosses the trigger level. The time measurement unit 40 measures five propagation times Tab (UT1, UT2, UT3, UT4, and UT5) from a transmission start time point of a transmission signal to the five zero-crossing points (see FIG. 7). In FIG. 5 and FIG. 7, UT1 ($T_{11}$) is a propagation time from the transmission start time point to a first zero-crossing point. UT2 ($T_{11} + T_{12}$) is a propagation time from the transmission start time point to a second zero-crossing point. UT3 ($T_{11} + T_{12} + T_{13}$) is a propagation time from the transmission start time point to a third zero-crossing point. UT4 ($T_{11} + T_{12} + T_{13} + T_{14}$) is a propagation time from the transmission start time point to a fourth zero-crossing point. UT5 ($T_{11} + T_{12} + T_{13} + T_{14} + T_{15}$) is a propagation time from the transmission start time point to a fifth zero-crossing point.

UT1, UT2, UT3, and UT4 are an example of a first propagation time, an example of a second propagation time longer than the first propagation time, an example of a third propagation time longer than the second propagation time, and an example of a fourth propagation time longer than the third propagation time, respectively.

In FIG. 6, in a case where an ultrasonic wave is transmitted from the sensor 2 to the sensor 1, the reception timing detection circuit 38 detects five zero-crossing points at which a reception signal crosses the reference level (in this example, the zero level) after the reception signal crosses the trigger level. The time measurement unit 40 measures five propagation times Tba (DT1, DT2, DT3, DT4, and DT5) from a transmission start time point of a transmission signal to the five zero-crossing points (see FIG. 7). In FIG. 6 and FIG. 7, DT1 ($T_{21}$) is a propagation time from the transmission start time point to a first zero-crossing point. DT2 ($T_{21} + T_{22}$) is a propagation time from the transmission start time point to a second zero-crossing point. DT3 ($T_{21} + T_{22} + T_{23}$) is a propagation time from the transmission start time point to a third zero-crossing point. DT4 ($T_{21} + T_{22} + T_{23} + T_{24}$) is a propagation time from the transmission start time point to a fourth zero-crossing point. DT5 ($T_{21} + T_{22} + T_{23} + T_{24} + T_{25}$) is a propagation time from the transmission start time point to a fifth zero-crossing point.

DT1, DT2, DT3, and DT4 are an example of a fifth propagation time, an example of a sixth propagation time longer than the fifth propagation time, an example of a seventh propagation time longer than the sixth propagation time, and an example of an eighth propagation time longer than the seventh propagation time, respectively.

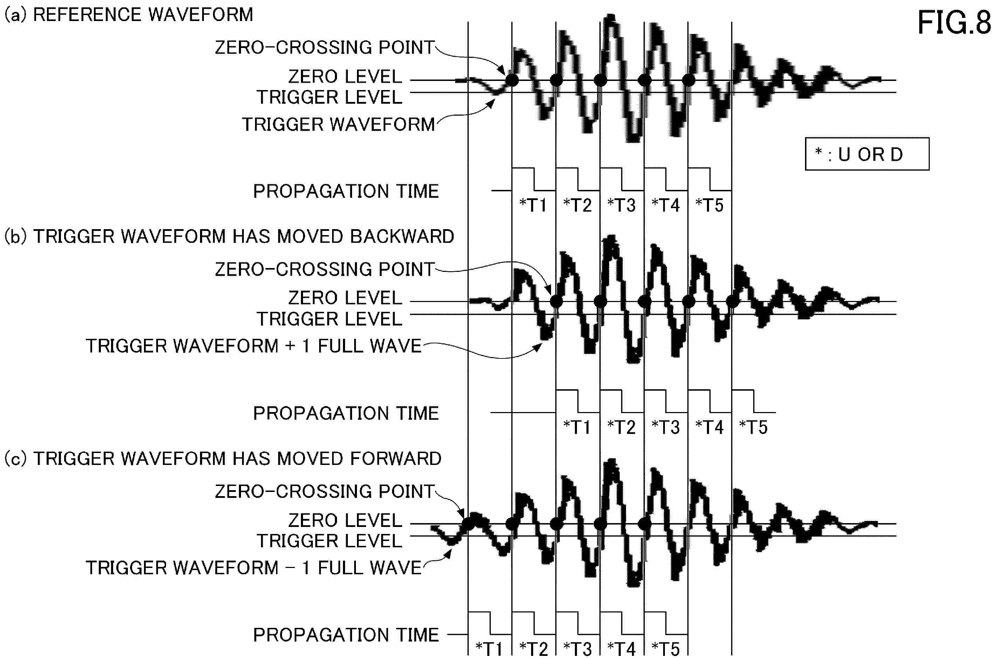

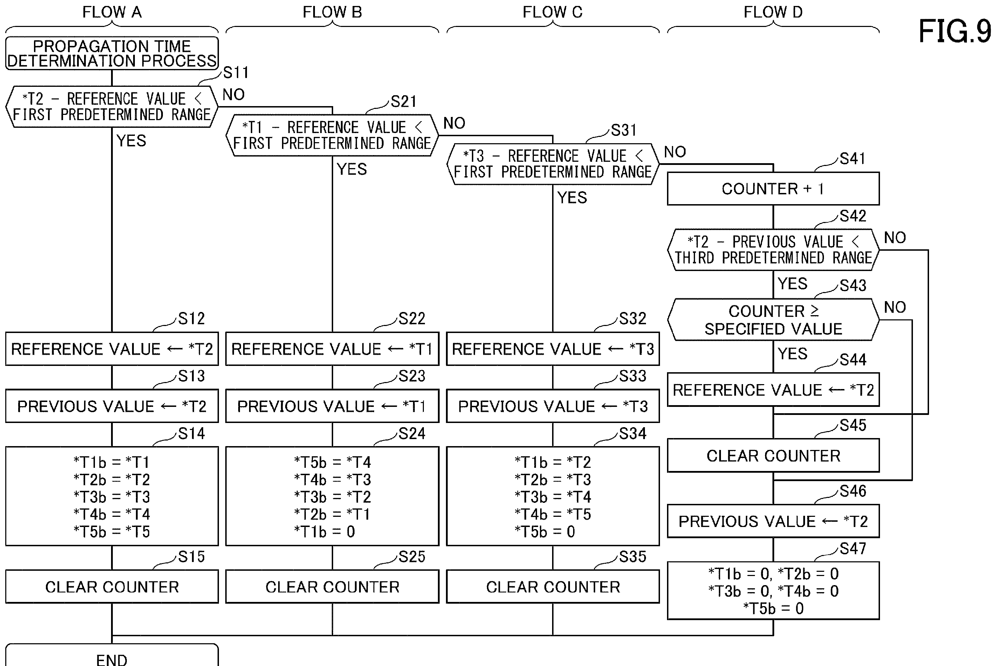

FIG. 8 is a waveform diagram illustrating time shifts in trigger waveforms. FIG. 9 is a flowchart illustrating flows of a propagation time determination process performed by the flow rate measurement unit 50. The propagation time determination process is periodically repeated. In this example, the flow rate measurement unit 50 determines an appropriate propagation time from among the five propagation times Tab (UT1, UT2, UT3, UT4, and UT5) by using the propagation time UT2 from the transmission start time point to the second zero-crossing point as a reference propagation time. Similarly, in this example, the flow rate measurement unit 50 determines an appropriate propagation time from among the five propagation times Tba (DT1, DT2, DT3, DT4, and DT5) by using the propagation time DT2 from the transmission start time point to the second zero-crossing point as a reference propagation time.

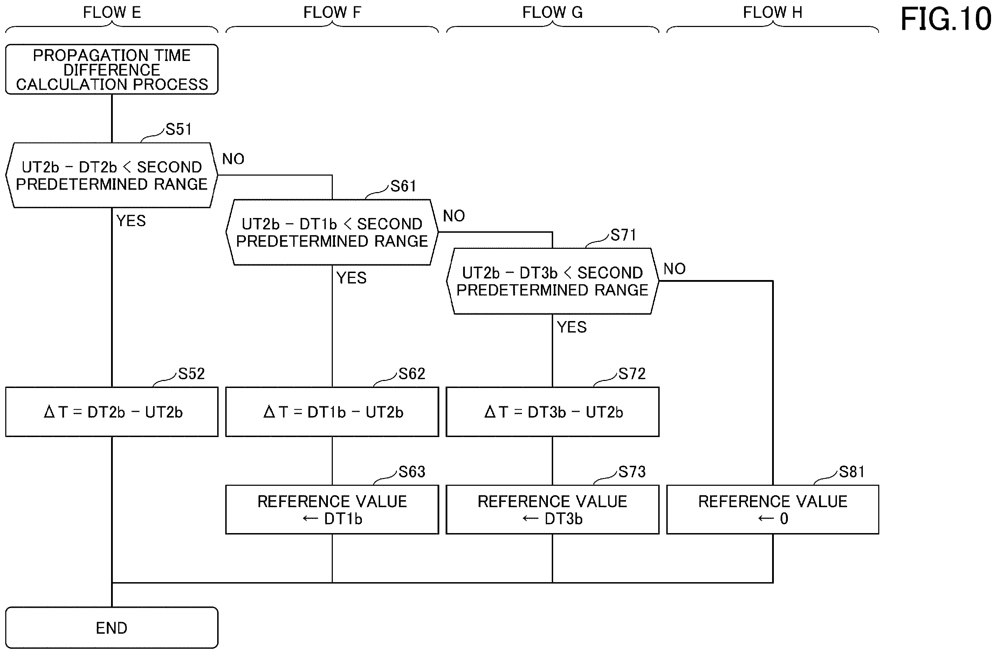

In FIG. 8 and FIG. 9, * represents U or D. FIG. 8 and FIG. 9 are shared between a case where an ultrasonic wave is transmitted from the sensor 1 to the sensor 2 (a case where * is U) and a case where an ultrasonic wave is transmitted from the sensor 2 to the sensor 1 (a case where * is D). Further, a "reference value" illustrated in FIG. 9 and FIG. 10 is an example of the above-described reference propagation time Tr. The process of FIG. 9 will be described below with reference to FIG. 8.

A flow A of the propagation time determination process (FIG. 9) includes steps S11 to S15. In the flow A, the flow rate measurement unit 50 determines whether a difference between a propagation time *T2 measured this time and the reference value is within the first predetermined range (step S11). If the difference is within the first predetermined range,

the flow rate measurement unit 50 determines that the propagation time *T2 is a true propagation time. Subsequently, the flow rate measurement unit 50 updates the reference value to *T2 (step S12), and updates the previous value to *T2 (step S13). If the difference between the propagation time *T2 measured this time and the reference value is within the first predetermined range, the flow rate measurement unit 50 determines that there is no time shift between the propagation time *T2 measured this time and the reference value. The flow rate measurement unit 50 stores five propagation times *T1, *T2, *T3, *T4, and *T5 measured this time in five buffers *T1b, *T2b, *T3b, *T4b, and *T5b, respectively (step S14). Thus, the true propagation time is stored in the buffer *T2b. The flow rate measurement unit 50 clears a counter (step S15).

Buffers UT1b, UT2b, and UT3b are an example of a first buffer, an example of a second buffer, and an example of a third buffer, respectively. Buffers DT1b, DT2b, and DT3b are an example of a fourth buffer, an example of a fifth buffer, and an example of a sixth buffer, respectively.

A flow B of the propagation time determination process (FIG. 9) includes steps S21 to S25. In the flow B, the difference between the propagation time *T2 measured this time and the reference value is outside the first predetermined range, and thus the flow rate measurement unit 50 determines whether a difference between the propagation time *T1 measured this time and the reference value is within the first predetermined range (step S21). If the difference is within the first predetermined range, the flow rate measurement unit 50 determines that *T1 is a true propagation time. Subsequently, the flow rate measurement unit 50 updates the reference value to *T1 (step S22), and updates the previous value to *T1 (step S23). If the difference between the propagation time *T1 measured this time and the reference value is within the first predetermined range, the flow rate measurement unit 50 determines that a time shift between the reference propagation time (*T2 in (a) of FIG. 8) and the propagation time *T2 is detected, that is, the trigger waveform has moved backward ((b) of FIG. 8). The flow rate measurement unit 50 stores *T1, *T2, *T3, and *T4 measured this time in the four buffers *T2b, *T3b, *T4b, and *T5b, respectively, in a shifted manner and stores zero in the buffer *T1b (step S24). Thus, the true propagation time is stored in the buffer *T2b. The flow rate measurement unit 50 clears the counter (step S25).

A flow C of the propagation time determination process (FIG. 9) includes steps S31 to S35. In the flow C, the difference between the propagation time *T2 measured this time and the reference value and the difference between the propagation time *T1 and the reference value are outside the first predetermined range, and thus the flow rate measurement unit 50 determines whether a difference between the propagation time *T3 measured this time and the reference value is within the first predetermined range (step S31). If the difference is within the first predetermined range, the flow rate measurement unit 50 determines that *T3 is a true propagation time. Subsequently, the flow rate measurement unit 50 updates the reference value to *T3 (step S32), and updates the previous value to *T3 (step S33). If the difference between the propagation time *T3 measured this time and the reference value is within the first predetermined range, the flow rate measurement unit 50 determines that a time shift between the reference propagation time (*T2 in (a) of FIG. 8) and the propagation time *T2 is detected, that is, the trigger waveform has moved forward ((c) of FIG. 8). The flow rate measurement unit 50 stores *T2, *T3, *T4, and *T5 measured this time in the four buffers *T1b, *T2b, *T3b, and *T4b, respectively, in a shifted manner and stores zero in the buffer *T5b (step S34). Thus, the true propagation time is stored in the buffer *T2b. The flow rate measurement unit 50 clears the counter (step S35).

A flow D of the propagation time determination process (FIG. 9) includes steps S41 to S47. The flow D is a flow for determining the reference value and is performed at the startup of the flow rate measurement unit 50, for example. The flow rate measurement unit 50 increments the counter by one (step 41). If a difference between the propagation time *T2 measured this time and the previous value is within a third predetermined range a specified number of times in a row, the flow rate measurement unit 50 updates the reference value and the previous value to *T2. In this manner, the reference value and the previous value are updated to stable *T2. Specifically, the flow rate measurement unit 50 determines whether a difference between the propagation time *T2 measured this time and the previous value is within the third predetermined range (step S42). If the difference is within the third predetermined range, the flow rate measurement unit 50 performs step S43, and if the difference is outside the third predetermined range, the flow rate measurement unit 50 performs step S45. If the difference is within the third predetermined range, the flow rate measurement unit 50 determines whether the counter is greater than or equal to or a specified value. If the counter is greater than or equal to or the specified value, the flow rate measurement unit 50 updates the reference value to *T2 (step S44). If the counter is less than the specified value, the flow rate measurement unit 50 performs step S46. Specifically, the flow rate measurement unit 50 clears the counter (step S45) and updates the previous value to *T2 (step S46). In the flow D, the flow rate measurement unit 50 stores zero in the five buffers *T1b, *T2b, *T3b, *T4b, and *T5b (step S47).

In the propagation time determination process of FIG. 9, a propagation time measured this time is compared with the reference value, and a forward or backward time shift in a trigger waveform with respect to the reference waveform is detected. Then, in the propagation time determination process, the propagation times *T1, *T2, *T3, *T4, and *T5 are rearranged and stored in the buffers *T1b, *T2b, *T3b, *T4b, and *T5b to correct the time shift. Thus, the flow rate measurement unit 50 can store, in the buffer UT2b, a true propagation time (a forward propagation time that is a specific propagation time Tabs) extracted from the five propagation times Tab (UT1, UT2, UT3, UT4, and UT5). Further, the flow rate measurement unit 50 can store, in the buffer DT2b, a true propagation time (a backward propagation time that is a specific propagation time Tbas) extracted from the five propagation times Tba (DT1, DT2, DT3, DT4, and DT5). The flow rate measurement unit 50 calculates the flow rate Q of the fluid through which the ultrasonic waves propagate based on the above Equations (1) to (5), by using the forward propagation time stored in the buffer UT2b and the backward propagation time stored in the buffer DT2b. Accordingly, the calculation accuracy of the flow rate Q is improved.

Next, a measurement method of calculating the flow rate Q by using the forward propagation time stored in the buffer UT2b and the backward propagation time stored in the buffer DT2b in a case where a difference between the forward propagation time and the backward propagation time is within a second predetermined range will be described with reference to FIG. 10. By this measurement method, more optimal propagation times are extracted, and the calculation accuracy of the flow rate Q is further improved.

FIG. 10 is a flowchart illustrating flows of a propagation time difference calculation process performed by the flow rate measurement unit 50. The propagation time difference calculation process is periodically repeated. The propagation time difference calculation process is performed after the propagation time determination process (FIG. 9), and the propagation time determination process is performed again after the propagation time difference calculation process is completed. In the propagation time difference calculation process, propagation time differences $\Delta T$ are calculated from the plurality of propagation times stored in the plurality of buffers in the propagation time determination process.

A flow E of the propagation time difference calculation process (FIG. 10) includes steps S51 and S52. In the flow E, the flow rate measurement unit 50 determines whether a difference between the propagation time stored in the buffer UT2b and the propagation time stored in the buffer DT2b is within the second predetermined range (step S51). If the difference is within the second predetermined range, the flow rate measurement unit 50 determines that there is no time shift between the propagation time stored in the buffer UT2b and the propagation time stored in the buffer DT2b. The flow rate measurement unit 50 calculates a propagation time difference $\Delta T$ by using the propagation time stored in the buffer UT2b and the propagation time stored in the buffer DT2b (step S52), and calculates the flow rate Q based on the above Equations (1) to (5).

A flow F of the propagation time difference calculation process (FIG. 10) includes steps S61 to S63. In the flow F, the difference between the propagation time stored in the buffer UT2b and the propagation time stored in the buffer DT2b is outside the second predetermined range, and thus, the flow rate measurement unit 50 determines whether a difference between the propagation time stored in the buffer UT2b and the propagation time stored in the buffer DT1b is within the second predetermined range (step S61). If the difference is within the second predetermined range, the flow rate measurement unit 50 determines that there is a time shift between the propagation time from the sensor 1 to the sensor 2 and the propagation time from the sensor 2 to the sensor 1. This time shift is similar to the time shift between the reference propagation time (*T2 in (a) of FIG. 8) and the propagation time *T2, in which the trigger waveform has moved backward ((b) of FIG. 8). Therefore, the flow rate measurement unit 50 calculates a propagation time difference $\Delta T$ by using the propagation time stored in the buffer UT2b and the propagation time stored in the buffer DT1b (step S62), and calculates the flow rate Q based on the above Equations (1) to (5). Subsequently, the flow rate measurement unit 50 updates the reference value to the propagation time stored in the buffer DT1b. Accordingly, the accuracy of the reference value is improved.

A flow G of the propagation time difference calculation process (FIG. 10) includes steps S71 to S73. In the flow G, the difference between the propagation time stored in the buffer UT2b and the propagation time stored in the buffer DT1b is outside the second predetermined range, and thus, the flow rate measurement unit 50 determines whether a difference between the propagation time stored in the buffer UT2b and the propagation time stored in the buffer DT3b is within the second predetermined range (step S71). If the difference is within the second predetermined range, the flow rate measurement unit 50 determines that there is a time shift between the propagation time from the sensor 1 to the sensor 2 and the propagation time from the sensor 2 to the sensor 1. This time shift is similar to the time shift between the reference propagation time (*T2 in (a) of FIG. 8) and the propagation time *T2, in which the trigger waveform has moved forward ((C) of FIG. 8). Therefore, the flow rate measurement unit 50 calculates a propagation time difference $\Delta T$ by using the propagation time stored in the buffer UT2b and the propagation time stored in the buffer DT3b (step S72), and calculates the flow rate Q based on the above Equations (1) to (5). Subsequently, the flow rate measurement unit 50 updates the reference value to the propagation time stored in the buffer DT3b. Accordingly, the accuracy of the reference value is improved.

A flow H of the propagation time difference calculation process (FIG. 10) includes step S81. In the flow H, the flow rate measurement unit 50 determines that a time shift between the propagation time stored in the buffer UT2b and the propagation time stored in the buffer DT2b is greater than or equal to two full-waves, clears the reference value to zero (step S81), and performs the propagation time determination process from the flow D again (FIG. 9).

In the propagation time difference calculation process of FIG. 10, if there is a time shift between the propagation time stored in the buffer UT2b and the propagation time stored in the buffer DT2b (if a difference is outside the second predetermined range), a propagation time difference $\Delta T$ is calculated by using the propagation time stored in the buffer DT1b or DT3b without using the propagation time stored in the buffer DT2b, and the flow rate Q is calculated.

According to the ultrasonic flowmeter and the measurement method of the present embodiment, even if there is a time shift in a trigger waveform of a reception signal when the flow rate is measured by a propagation time difference method, a measurement error can be prevented, and an optimum propagation time can be automatically determined from among five propagation times such that the flow rate Q can be calculated with high accuracy.

While certain embodiments are described above, the embodiments are presented as examples, and are not intended to limit the scope of the present invention. The embodiments described above can be implemented in various other forms, and various combinations, omissions, substitutions, modifications, and the like can be made without departing from the scope of the present invention defined by the appended claims.

The application of the measurement method according to the present embodiment is not limited to the ultrasonic flowmeter, and may be applied to an apparatus that measures the physical quantity of a medium through which an ultrasonic wave propagates. For example, the measurement method according to the present embodiment may be applied to other apparatuses such as an ultrasonic level meter that measures the height of fluid such as a water level by using an ultrasonic wave, and an ultrasonic thickness meter that measures the thickness of an object by using an ultrasonic wave.

DESCRIPTION OF THE REFERENCE NUMERALS

    10a, 10b ultrasonic probe
    11a, 11b ultrasonic transducer
    12a, 12b wedge
    31 transmitter
    32 receiver
    33a, 33b switch
    35 controller
    38 reception timing detection circuit
    40 time measurement unit
    50 flow rate measurement unit
    100 pipe
    102 fluid
    110 propagation path
    300 ultrasonic flowmeter

**Claims**

1. An ultrasonic flowmeter (300) comprising:
   a time measurement unit (40) configured to measure a plurality of propagation times from a time point at which an ultrasonic wave starts to be transmitted to each crossing time point at which a reception signal of the ultrasonic wave crosses a reference level after the reception signal crosses a threshold voltage; **characterised in that** it further comprises:

   a flow rate measurement unit (50) configured to extract, from among the plurality of propagation times, a specific propagation time whose difference from a reference propagation time (Tr) is within a first predetermined range, and use the specific propagation time to calculate a flow rate of fluid through which the ultrasonic wave propagates,
   wherein the flow rate measurement unit (50) is configured to update the reference propagation time (Tr) to the specific propagation time.

2. The ultrasonic flowmeter (300) according to claim 1, wherein the flow rate measurement unit (50) is configured to extract a forward propagation time that is a specific propagation time, from among a plurality of propagation times measured when an ultrasonic wave transmitted from a first sensor is received by a second sensor, extract a backward propagation time that is a specific propagation time, from among a plurality of propagation times measured when an ultrasonic wave transmitted from the second sensor is received by the first sensor, and use the forward propagation time and the backward propagation time to calculate the flow rate.

3. The ultrasonic flowmeter (300) according to claim 2, wherein the flow rate measurement unit (50) is configured to use the forward propagation time and the backward propagation time to calculate the flow rate in a case where a difference between the forward propagation time and the backward propagation time is within a second predetermined range.

4. The ultrasonic flowmeter (300) according to claim 3, wherein

the plurality of propagation times measured when the ultrasonic wave transmitted from the first sensor is received by the second sensor include a first forward propagation time, a second forward propagation time, and a third forward propagation time, the first forward propagation time being shorter than the second forward propagation time, the second forward propagation time being the forward propagation time, and the third forward propagation time being longer than the second forward propagation time, and

the flow rate measurement unit (50) is configured to extract a specific forward propagation time whose difference from the backward propagation time is within the second predetermined range from among the first forward propagation time, the second forward propagation time, and the third forward propagation time, and use the specific forward propagation time and the backward propagation time to calculate the flow rate.

5. The ultrasonic flowmeter (300) according to claim 4, wherein the flow rate measurement unit (50) is configured to update the reference propagation time (Tr) to the specific forward propagation time.

6. The ultrasonic flowmeter (300) according to any one of claims 1 to 3, wherein

the plurality of propagation times measured when the ultrasonic wave transmitted from the first sensor is received by the second sensor include a first propagation time, a second propagation time, a third propagation time, and a fourth propagation time, the second propagation time being longer than the first propagation time, the third propagation time being longer than the second propagation time, and the fourth propagation time being longer than the third propagation time,

the plurality of propagation times measured when the ultrasonic wave transmitted from the second sensor is received by the first sensor include a fifth propagation time, a sixth propagation time, a seventh propagation time, and an eighth propagation time, the sixth propagation time being longer than the fifth propagation time, the seventh propagation time being longer than the sixth propagation time, and the eighth propagation time being longer than the seventh propagation time,

the flow rate measurement unit (50) is configured to store the first propagation time, the second propagation time, and the third propagation time in a first buffer, a second buffer, and a third buffer, respectively, in a case where a difference between the second propagation time and the reference propagation time (Tr) is within the first predetermined range,

the flow rate measurement unit (50) is configured to store zero, the first propagation time, and the second propagation time in the first buffer, the second buffer, and the third buffer, respectively, in a case where a difference between the first propagation time and the reference propagation time (Tr) is within the first predetermined range,

the flow rate measurement unit (50) is configured to store the second propagation time, the third propagation time, and the fourth propagation time in the first buffer, the second buffer, and the third buffer, respectively, in a case where a difference between the third propagation time and the reference propagation time (Tr) is within the first predetermined range,

the flow rate measurement unit (50) is configured to store the fifth propagation time, the sixth propagation time, and the seventh propagation time in a fourth buffer, a fifth buffer, and a sixth buffer, respectively, in a case where a difference between the sixth propagation time and the reference propagation time (Tr) is within the first predetermined range,

the flow rate measurement unit (50) is configured to store zero, the fifth propagation time, and the sixth propagation time in the fourth buffer, the fifth buffer, and the sixth buffer, respectively, in a case where a difference between the fifth propagation time and the reference propagation time (Tr) is within the first predetermined range, and

the flow rate measurement unit (50) is configured to store the sixth propagation time, the seventh propagation time, and the eighth propagation time in the fourth buffer, the fifth buffer, and the sixth buffer, respectively, in a case where a difference between the seventh propagation time and the reference propagation time (Tr) is within the first predetermined range.

7. The ultrasonic flowmeter (300) according to claim 6, wherein the flow rate measurement unit (50) is configured to

use a propagation time stored in the second buffer and a propagation time stored in the fifth buffer to calculate the flow rate in a case where a difference between the propagation time stored in the second buffer and the propagation time stored in the fifth buffer is within the second predetermined range,

use the propagation time stored in the second buffer and a propagation time stored in the fourth buffer to calculate the flow rate in a case where a difference between the propagation time stored in the second buffer and the propagation time stored in the fourth buffer is within the second predetermined range, and
use the propagation time stored in the second buffer and a propagation time stored in the sixth buffer to calculate the flow rate in a case where a difference between the propagation time stored in the second buffer and the propagation time stored in the sixth buffer is within the second predetermined range.

8. The ultrasonic flowmeter (300) according to claim 7, wherein the flow rate measurement unit (50) is configured to

update the reference propagation time (Tr) to the propagation time stored in the fourth buffer in the case where the difference between the propagation time stored in the second buffer and the propagation time stored in the fourth buffer is within the second predetermined range, and
update the reference propagation time (Tr) to the propagation time stored in the sixth buffer in the case where the difference between the propagation time stored in the second buffer and the propagation time stored in the sixth buffer is within the second predetermined range.

9. A measurement method comprising:

measuring a plurality of propagation times from a time point at which an ultrasonic wave starts to be transmitted to each crossing time point at which a reception signal of the ultrasonic wave crosses a reference level after the reception signal crosses a threshold voltage;
extracting, from among the plurality of propagation times, a specific propagation time whose difference from a reference propagation time (Tr) is within a first predetermined range, and using the specific propagation time to calculate a physical quantity of a medium through which the ultrasonic wave propagates; and

updating the reference propagation time (Tr) to the specific propagation time.

10. The measurement method according to claim 9, wherein the physical quantity of the medium is a flow rate of fluid through which the ultrasonic wave propagates.


**Patentansprüche**

1. Ultraschalldurchflussmesser (300), umfassend:
eine Zeitmesseinheit (40), die eingerichtet ist, mehrere Ausbreitungszeiten von einem Zeitpunkt, an dem eine Ultraschallwelle beginnt, gesendet zu werden, bis zu jedem Kreuzungszeitpunkt zu messen, an dem ein Empfangssignal der Ultraschallwelle einen Referenzpegel kreuzt, nachdem das Empfangssignal einen Schwellenwert kreuzt; **dadurch gekennzeichnet, dass** er ferner umfasst:

eine Durchflussratenmesseinheit (50), die eingerichtet ist, aus den mehreren Ausbreitungszeiten eine spezifische Ausbreitungszeit zu extrahieren, deren Differenz von einer Referenzausbreitungszeit (Tr) innerhalb eines ersten vorbestimmten Bereichs liegt, und die spezifische Ausbreitungszeit zu verwenden, um eine Durchflussrate des Fluids, durch das sich die Ultraschallwelle ausbreitet, zu berechnen,
wobei die Durchflussratenmesseinheit (50) eingerichtet ist, die Referenzausbreitungszeit (Tr) auf die spezifische Ausbreitungszeit zu aktualisieren.

2. Ultraschalldurchflussmesser (300) nach Anspruch 1, wobei die Durchflussratenmesseinheit (50) eingerichtet ist, eine Vorwärtsausbreitungszeit, die eine spezifische Ausbreitungszeit ist, aus mehreren Ausbreitungszeiten zu extrahieren, die gemessen werden, wenn eine von einem ersten Sensor gesendete Ultraschallwelle von einem zweiten Sensor empfangen wird, eine Rückwärtsausbreitungszeit, die eine spezifische Ausbreitungszeit ist, aus mehreren Ausbreitungszeiten zu extrahieren, die gemessen werden, wenn eine von dem zweiten Sensor gesendete Ultraschallwelle von dem ersten Sensor empfangen wird, und die Vorwärtsausbreitungszeit und die Rückwärtsausbreitungszeit zu verwenden, um die Durchflussrate zu berechnen.

3. Ultraschalldurchflussmesser (300) nach Anspruch 2, wobei die Durchflussratenmesseinheit (50) eingerichtet ist, die Vorwärtsausbreitungszeit und die Rückwärtsausbreitungszeit zu verwenden, um die Durchflussrate zu berechnen, wenn eine Differenz zwischen der Vorwärtsausbreitungszeit und der Rückwärtsausbreitungszeit innerhalb eines zweiten vorbestimmten Bereichs liegt.

4. Ultraschalldurchflussmesser (300) nach Anspruch 3, wobei

die mehreren Ausbreitungszeiten, die gemessen werden, wenn die von dem ersten Sensor gesendete Ultraschallwelle von dem zweiten Sensor empfangen wird, eine erste Vorwärtsausbreitungszeit, eine zweite Vorwärtsausbreitungszeit und eine dritte Vorwärtsausbreitungszeit umfassen, die erste Vorwärtsausbreitungszeit kürzer ist als die zweite Vorwärtsausbreitungszeit, die zweite Vorwärtsausbreitungszeit die Vorwärtsausbreitungszeit ist und die dritte Vorwärtsausbreitungszeit länger ist als die zweite Vorwärtsausbreitungszeit und die Durchflussratenmesseinheit (50) eingerichtet ist, eine spezifische Vorwärtsausbreitungszeit, deren Differenz von der Rückwärtsausbreitungszeit innerhalb des zweiten vorbestimmten Bereichs liegt, aus der ersten Vorwärtsausbreitungszeit, der zweiten Vorwärtsausbreitungszeit und der dritten Vorwärtsausbreitungszeit zu extrahieren, und die spezifische Vorwärtsausbreitungszeit und die Rückwärtsausbreitungszeit zum Berechnen der Durchflussrate zu verwenden.

5. Ultraschalldurchflussmesser (300) nach Anspruch 4, wobei die Durchflussmesseinheit (50) eingerichtet ist, die Referenzausbreitungszeit (Tr) auf die spezifische Vorwärtsausbreitungszeit zu aktualisieren.

6. Ultraschalldurchflussmesser (300) nach einem der Ansprüche 1 bis 3, wobei

die mehreren Ausbreitungszeiten, die gemessen werden, wenn die von dem ersten Sensor gesendete Ultraschallwelle von dem zweiten Sensor empfangen wird, eine erste Ausbreitungszeit, eine zweite Ausbreitungszeit, eine dritte Ausbreitungszeit und eine vierte Ausbreitungszeit umfassen, die zweite Ausbreitungszeit länger ist als die erste Ausbreitungszeit, die dritte Ausbreitungszeit länger ist als die zweite Ausbreitungszeit und die vierte Ausbreitungszeit länger ist als die dritte Ausbreitungszeit,
die mehreren Ausbreitungszeiten, die gemessen werden, wenn die von dem zweiten Sensor gesendete Ultraschallwelle von dem ersten Sensor empfangen wird, eine fünfte Ausbreitungszeit, eine sechste Ausbreitungszeit, eine siebte Ausbreitungszeit und eine achte Ausbreitungszeit umfassen, die sechste Ausbreitungszeit länger ist als die fünfte Ausbreitungszeit, die siebte Ausbreitungszeit länger ist als die sechste Ausbreitungszeit und die achte Ausbreitungszeit länger ist als die siebte Ausbreitungszeit,
die Durchflussratenmesseinheit (50) eingerichtet ist, die erste Ausbreitungszeit, die zweite Ausbreitungszeit und die dritte Ausbreitungszeit entsprechend in einem ersten Puffer, einem zweiten Puffer und einem dritten Puffer zu speichern, wenn eine Differenz zwischen der zweiten Ausbreitungszeit und der Referenzausbreitungszeit (Tr) innerhalb des ersten vorbestimmten Bereichs liegt,
die Durchflussratenmesseinheit (50) eingerichtet ist, Null, die erste Ausbreitungszeit und die zweite Ausbreitungszeit entsprechend in dem ersten Puffer, dem zweiten Puffer und dem dritten Puffer zu speichern, wenn eine Differenz zwischen der ersten Ausbreitungszeit und der Referenzausbreitungszeit (Tr) innerhalb des ersten vorbestimmten Bereichs liegt,
die Durchflussratenmesseinheit (50) eingerichtet ist, die zweite Ausbreitungszeit, die dritte Ausbreitungszeit und die vierte Ausbreitungszeit entsprechend in dem ersten Puffer, dem zweiten Puffer und dem dritten Puffer zu speichern, wenn eine Differenz zwischen der dritten Ausbreitungszeit und der Referenzausbreitungszeit (Tr) innerhalb des ersten vorbestimmten Bereichs liegt,
die Durchflussratenmesseinheit (50) eingerichtet ist, die fünfte Ausbreitungszeit, die sechste Ausbreitungszeit und die siebte Ausbreitungszeit entsprechend in einem vierten Puffer, einem fünften Puffer und einem sechsten Puffer zu speichern, wenn eine Differenz zwischen der sechsten Ausbreitungszeit und der Referenzausbreitungszeit (Tr) innerhalb des ersten vorbestimmten Bereichs liegt,
die Durchflussratenmesseinheit (50) eingerichtet ist, Null, die fünfte Ausbreitungszeit und die sechste Ausbreitungszeit entsprechend in dem vierten Puffer, dem fünften Puffer und dem sechsten Puffer zu speichern, wenn eine Differenz zwischen der fünften Ausbreitungszeit und der Referenzausbreitungszeit (Tr) innerhalb des ersten vorbestimmten Bereichs liegt, und
die Durchflussratenmesseinheit (50) eingerichtet ist, die sechste Ausbreitungszeit, die siebte Ausbreitungszeit und die achte Ausbreitungszeit entsprechend in dem vierten Puffer, dem fünften Puffer und dem und dem sechsten Puffer zu speichern, wenn eine Differenz zwischen der siebten Ausbreitungszeit und der Referenzausbreitungszeit (Tr) innerhalb des ersten vorbestimmten Bereichs liegt.

7. Ultraschalldurchflussmesser (300) nach Anspruch 6, wobei die Durchflussratenmesseinheit (50) eingerichtet ist

eine in dem zweiten Puffer gespeicherte Ausbreitungszeit und eine in dem fünften Puffer gespeicherte Ausbreitungszeit zu verwenden, um die Durchflussrate zu berechnen, wenn eine Differenz zwischen der in dem zweiten Puffer gespeicherten Ausbreitungszeit und der in dem fünften Puffer gespeicherten Ausbreitungszeit innerhalb des zweiten vorbestimmten Bereichs liegt,
die in dem zweiten Puffer gespeicherte Ausbreitungszeit und eine in dem vierten Puffer gespeicherte Ausbreitungszeit zu verwenden, um die Durchflussrate zu berechnen, wenn eine Differenz zwischen der in dem zweiten Puffer gespeicherten Ausbreitungszeit und der in dem vierten Puffer gespeicherten Ausbreitungszeit innerhalb des zweiten vorbestimmten Bereichs liegt, und

die in dem zweiten Puffer gespeicherte Ausbreitungszeit und eine in dem sechsten Puffer gespeicherte Ausbreitungszeit zu verwenden, um die Durchflussrate zu berechnen, wenn eine Differenz zwischen der in dem zweiten Puffer gespeicherten Ausbreitungszeit und der in dem sechsten Puffer gespeicherten Ausbreitungszeit innerhalb des zweiten vorbestimmten Bereichs liegt.

8. Ultraschalldurchflussmesser (300) nach Anspruch 7, wobei die Durchflussratenmesseinheit (50) eingerichtet ist,

die Referenzausbreitungszeit (Tr) auf die in dem vierten Puffer gespeicherte Ausbreitungszeit zu aktualisieren, wenn die Differenz zwischen der in dem zweiten Puffer gespeicherten Ausbreitungszeit und der in dem vierten Puffer gespeicherten Ausbreitungszeit innerhalb des zweiten vorbestimmten Bereichs liegt, und
die Referenzausbreitungszeit (Tr) auf die in dem sechsten Puffer gespeicherte Ausbreitungszeit zu aktualisieren, wenn die Differenz zwischen der in dem zweiten Puffer gespeicherten Ausbreitungszeit und der in dem sechsten Puffer gespeicherten Ausbreitungszeit innerhalb des zweiten vorbestimmten Bereichs liegt.

9. Messverfahren, umfassend:

Messen mehrerer Ausbreitungszeiten von einem Zeitpunkt, an dem eine Ultraschallwelle beginnt, gesendet zu werden, bis zu jedem Kreuzungszeitpunkt, an dem ein Empfangssignal der Ultraschallwelle einen Referenzpegel kreuzt, nachdem das Empfangssignal einen Schwellenwert kreuzt;
Extrahieren einer spezifischen Ausbreitungszeit aus den mehreren Ausbreitungszeiten, deren Differenz von einer Referenzausbreitungszeit (Tr) innerhalb eines ersten vorbestimmten Bereichs liegt, und Verwenden der spezifischen Ausbreitungszeit zum Berechnen einer physikalischen Größe eines Mediums, durch das sich die Ultraschallwelle ausbreitet; und
Aktualisieren der Referenzausbreitungszeit (Tr) auf die spezifische Ausbreitungszeit.

10. Messverfahren nach Anspruch 9, wobei die physikalische Größe des Mediums eine Durchflussrate des Fluids ist, durch das sich die Ultraschallwelle ausbreitet.

**Revendications**

1. Débitmètre à ultrasons (300) comprenant :

une unité de mesure de temps (40) configurée pour mesurer une pluralité de temps de propagation allant d'un instant auquel une onde ultrasonore commence à être émise jusqu'à chaque instant de franchissement auquel un signal de réception de l'onde ultrasonore franchit un niveau de référence après que le signal de réception franchit une tension seuil ;
**caractérisé en ce qu'**il comprend en outre :

une unité de mesure de débit (50) configurée pour extraire, parmi la pluralité de temps de propagation, un temps de propagation spécifique dont la différence par rapport à un temps de propagation de référence (Tr) est au sein d'une première plage prédéterminée, et utiliser le temps de propagation spécifique pour calculer un débit d'un fluide à travers lequel l'onde ultrasonore se propage,
dans lequel l'unité de mesure de débit (50) est configurée pour mettre à jour le temps de propagation de référence (Tr) vers le temps de propagation spécifique.

2. Débitmètre à ultrasons (300) selon la revendication 1, dans lequel l'unité de mesure de débit (50) est configurée pour extraire un temps de propagation vers l'avant qui est un temps de propagation spécifique, parmi une pluralité de temps de propagation mesurés lorsqu'une onde ultrasonore émise par un premier capteur est reçue par un deuxième capteur, extraire un temps de propagation vers l'arrière qui est un temps de propagation spécifique, parmi une pluralité de temps de propagation mesurés lorsqu'une onde ultrasonore émise par le deuxième capteur est reçue par le premier capteur, et utiliser le temps de propagation vers l'avant et le temps de propagation vers l'arrière pour calculer le débit.

3. Débitmètre à ultrasons (300) selon la revendication 2, dans lequel l'unité de mesure de débit (50) est configurée pour utiliser le temps de propagation vers l'avant et le temps de propagation vers l'arrière pour calculer le débit dans un cas où une différence entre le temps de propagation vers l'avant et le temps de propagation vers l'arrière est au sein d'une deuxième plage prédéterminée.

4. Débitmètre à ultrasons (300) selon la revendication 3, dans lequel

la pluralité de temps de propagation mesurés lorsque l'onde ultrasonore émise par le premier capteur est reçue par le deuxième capteur incluent un premier temps de propagation vers l'avant, un deuxième temps de propagation vers l'avant, et un troisième temps de propagation vers l'avant, le premier temps de propagation vers l'avant étant plus court que le deuxième temps de propagation vers l'avant, le deuxième temps de propagation vers l'avant étant le temps de propagation vers l'avant, et le troisième temps de propagation vers l'avant étant plus long que le deuxième temps de propagation vers l'avant, et
l'unité de mesure de débit (50) est configurée pour extraire un temps de propagation vers l'avant spécifique dont la différence par rapport au temps de propagation vers l'arrière est au sein de la deuxième plage prédéterminée parmi le premier temps de propagation vers l'avant, le deuxième temps de propagation vers l'avant, et le troisième temps de propagation vers l'avant, et utiliser le temps de propagation vers l'avant spécifique et le temps de propagation vers l'arrière pour calculer le débit.

5. Débitmètre à ultrasons (300) selon la revendication 4, dans lequel l'unité de mesure de débit (50) est configurée pour mettre à jour le temps de propagation de référence (Tr) vers le temps de propagation vers l'avant spécifique.

6. Débitmètre à ultrasons (300) selon l'une quelconque des revendications 1 à 3, dans lequel

la pluralité de temps de propagation mesurés lorsque l'onde ultrasonore émise par le premier capteur est reçue par le deuxième capteur incluent un premier temps de propagation, un deuxième temps de propagation, un troisième temps de propagation, et un quatrième temps de propagation, le deuxième temps de propagation étant plus long que le premier temps de propagation, le troisième temps de propagation étant plus long que le deuxième temps de propagation, et le quatrième temps de propagation étant plus long que le troisième temps de propagation,
la pluralité de temps de propagation mesurés lorsque l'onde ultrasonore émise par le deuxième capteur est reçue par le premier capteur incluent un cinquième temps de propagation, un sixième temps de propagation, un septième temps de propagation, et un huitième temps de propagation, le sixième temps de propagation étant plus long que le cinquième temps de propagation, le septième temps de propagation étant plus long que le sixième temps de propagation, et le huitième temps de propagation étant plus long que le septième temps de propagation,
l'unité de mesure de débit (50) est configurée pour stocker le premier temps de propagation, le deuxième temps de propagation, et le troisième temps de propagation dans un premier tampon, un deuxième tampon, et un troisième tampon, respectivement, dans un cas où une différence entre le deuxième temps de propagation et le temps de propagation de référence (Tr) est au sein de la première plage prédéterminée,
l'unité de mesure de débit (50) est configurée pour stocker zéro, le premier temps de propagation, et le deuxième temps de propagation dans le premier tampon, le deuxième tampon, et le troisième tampon, respectivement, dans un cas où une différence entre le premier temps de propagation et le temps de propagation de référence (Tr) est au sein de la première plage prédéterminée,
l'unité de mesure de débit (50) est configurée pour stocker le deuxième temps de propagation, le troisième temps de propagation, et le quatrième temps de propagation dans le premier tampon, le deuxième tampon, et le troisième tampon, respectivement, dans un cas où une différence entre le troisième temps de propagation et le temps de propagation de référence (Tr) est au sein de la première plage prédéterminée,
l'unité de mesure de débit (50) est configurée pour stocker le cinquième temps de propagation, le sixième temps de propagation, et le septième temps de propagation dans un quatrième tampon, un cinquième tampon, et un sixième tampon, respectivement, dans un cas où une différence entre le sixième temps de propagation et le temps de propagation de référence (Tr) est au sein de la première plage prédéterminée,
l'unité de mesure de débit (50) est configurée pour stocker zéro, le cinquième temps de propagation, et le sixième temps de propagation dans le quatrième tampon, le cinquième tampon, et le sixième tampon, respectivement, dans un cas où une différence entre le cinquième temps de propagation et le temps de propagation de référence (Tr) est au sein de la première plage prédéterminée, et
l'unité de mesure de débit (50) est configurée pour stocker le sixième temps de propagation, le septième temps de propagation, et le huitième temps de propagation dans le quatrième tampon, le cinquième tampon, et le sixième tampon, respectivement, dans un cas où une différence entre le septième temps de propagation et le temps de propagation de référence (Tr) est au sein de la première plage prédéterminée.

7. Débitmètre à ultrasons (300) selon la revendication 6, dans lequel l'unité de mesure de débit (50) est configurée pour

utiliser un temps de propagation stocké dans le deuxième tampon et un temps de propagation stocké dans le cinquième tampon pour calculer le débit dans un cas où une différence entre le temps de propagation stocké dans le deuxième tampon et le temps de propagation stocké dans le cinquième tampon est au sein de la deuxième plage prédéterminée,

utiliser le temps de propagation stocké dans le deuxième tampon et un temps de propagation stocké dans le quatrième tampon pour calculer le débit dans un cas où une différence entre le temps de propagation stocké dans le deuxième tampon et le temps de propagation stocké dans le quatrième tampon est au sein de la deuxième plage prédéterminée, et

utiliser le temps de propagation stocké dans le deuxième tampon et un temps de propagation stocké dans le sixième tampon pour calculer le débit dans un cas où une différence entre le temps de propagation stocké dans le deuxième tampon et le temps de propagation stocké dans le sixième tampon est au sein de la deuxième plage prédéterminée.

8. Débitmètre à ultrasons (300) selon la revendication 7, dans lequel l'unité de mesure de débit (50) est configurée pour

mettre à jour le temps de propagation de référence (Tr) vers le temps de propagation stocké dans le quatrième tampon dans le cas où la différence entre le temps de propagation stocké dans le deuxième tampon et le temps de propagation stocké dans le quatrième tampon est au sein de la deuxième plage prédéterminée, et

mettre à jour le temps de propagation de référence (Tr) vers le temps de propagation stocké dans le sixième tampon dans le cas où la différence entre le temps de propagation stocké dans le deuxième tampon et le temps de propagation stocké dans le sixième tampon est au sein de la deuxième plage prédéterminée.

9. Procédé de mesure comprenant :

la mesure d'une pluralité de temps de propagation allant d'un instant auquel une onde ultrasonore commence à être émise jusqu'à chaque instant de franchissement auquel un signal de réception de l'onde ultrasonore franchit un niveau de référence après que le signal de réception franchit une tension seuil ;

l'extraction, parmi la pluralité de temps de propagation, d'un temps de propagation spécifique dont la différence par rapport à un temps de propagation de référence (Tr) est au sein d'une première plage prédéterminée, et l'utilisation du temps de propagation spécifique pour calculer une grandeur physique d'un milieu à travers lequel l'onde ultrasonore se propage ; et

la mise à jour du temps de propagation de référence (Tr) vers le temps de propagation spécifique.

10. Procédé de mesure selon la revendication 9, dans lequel la grandeur physique du milieu est un débit d'un fluide à travers lequel l'onde ultrasonore se propage.

# FIG.1

# FIG.2

# FIG.3

# FIG.4

RECEPTION
TIMING SIGNAL g
(STOP)

RECEPTION WAVE i

FIRST OSCILLATION HALF-WAVE

$V_{COM}$

SECOND OSCILLATION
HALF-WAVE

$V_{THLD}$

c8x    q8x

EIGHTH OSCILLATION HALF-WAVE    TENTH OSCILLATION HALF-WAVE

q10x

c10x

TIME

EP 4 439 019 B1

# FIG.5

# FIG.6

FIG.7

(a) REFERENCE WAVEFORM

ZERO-CROSSING POINT

ZERO LEVEL
TRIGGER LEVEL
TRIGGER WAVEFORM

* : U OR D

PROPAGATION TIME

*T1 *T2 *T3 *T4 *T5

(b) TRIGGER WAVEFORM HAS MOVED BACKWARD

ZERO-CROSSING POINT

ZERO LEVEL
TRIGGER LEVEL

TRIGGER WAVEFORM + 1 FULL WAVE

PROPAGATION TIME

*T1 *T2 *T3 *T4 *T5

(c) TRIGGER WAVEFORM HAS MOVED FORWARD

ZERO-CROSSING POINT

ZERO LEVEL
TRIGGER LEVEL

TRIGGER WAVEFORM − 1 FULL WAVE

PROPAGATION TIME

*T1 *T2 *T3 *T4 *T5

FIG.8

EP 4 439 019 B1

FIG.9

FIG.10

FLOW E     FLOW F     FLOW G     FLOW H

PROPAGATION TIME DIFFERENCE CALCULATION PROCESS

S51

$UT2b - DT2b <$ SECOND PREDETERMINED RANGE — NO

YES

S61

$UT2b - DT1b <$ SECOND PREDETERMINED RANGE — NO

YES

S71

$UT2b - DT3b <$ SECOND PREDETERMINED RANGE — NO

YES

S52

$\Delta T = DT2b - UT2b$

S62

$\Delta T = DT1b - UT2b$

S72

$\Delta T = DT3b - UT2b$

S63

REFERENCE VALUE ← DT1b

S73

REFERENCE VALUE ← DT3b

S81

REFERENCE VALUE ← 0

END

EP 4 439 019 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007322194 A
- JP 2021067572 A